# EUROPEAN PATENT APPLICATION

(11) **EP 4 751 563 A1**
(43) Date of publication of application: **03.06.2026**
(21) Application number: 25218563.2
(22) Date of filing: 26.11.2025
(51) Int. Cl.: A01K 61/54, A01K 61/60

(54) **FERTILIZER FEEDING DEVICE, FERTILIZER FEEDING METHOD, AND FLOATING STRUCTURE**

(30) Priority: 29.11.2024 JP 2024208745
(71) Applicant: Yokogawa Electric Corporation, Musashino-shi, Tokyo 180-8750 (JP)
(72) Inventor: NAKANISHI, Hirofumi, Musashino-shi, Tokyo, 180-8750 (JP)
(74) Representative: Hoffmann Eitle

(57) **Abstract**

Provided is a fertilizer feeding device (100, 300, 400) including: a feeding conduit (120, 310, 420, 510) with apertures (125) for feeding fertilizer to marine products (110) to be cultivated underwater; and a fertilizer feeder (130) connected to the feeding conduit, which feeds fertilizer to the feeding conduit. In the above-described fertilizer feeding device, the feeding conduit may have at least one aperture of the apertures provided with respect to each of a plurality of depths underwater; and lock the marine product near the at least one aperture provided with respect to each of the plurality of depths.

## Description

### BACKGROUND

### 1. TECHNICAL FIELD

The present disclosure relates to a fertilizer feeding device, a fertilizer feeding method and a floating structure.

### 2. RELATED ART

In Patent document 1, "a method for cultivating oysters or scallops, characterized by installing a fertilizer container containing fertilizer in a hanging-type cultivator" (paragraph 0006) is described.

### Related Art Documents

### Patent Document

Patent Document 1: Japanese Patent Application Publication No. 2011-115183.

### SUMMARY

(1) In a first aspect of the present disclosure, provided is a fertilizer feeding device, including: a feeding conduit with apertures for feeding fertilizer to marine products to be cultivated underwater; and a fertilizer feeder connected to the feeding conduit, which feeds fertilizer to the feeding conduit.
(2) In the fertilizer feeding device according to the above-described (1), the feeding conduit may have at least one aperture of the apertures provided at each of a plurality of depths underwater; and locks the marine products near the at least one aperture provided at each of the plurality of depths.
(3) In the fertilizer feeding device according to the above-described (1) or (2), the aperture may be provided in a direction of the marine products.
(4) In the fertilizer feeding device according to any of the above-described (1) to (3), a plurality of feeding conduits may be provided in directions different from each other with respect to the marine products in a horizontal plane.
(5) In the fertilizer feeding device according to the above-described (4), the fertilizer feeder may switch a feeding conduit that feeds fertilizer among the plurality of feeding conduits according to a water flow. The fertilizer feeder may select the feeding conduit installed in an upstream direction of the water flow as a feeding conduit for feeding the fertilizer.
(6) In the fertilizer feeding device according to any of the above-described (1) to (5), the feeding conduit may lock the marine products on an outer surface thereof.
(7) The fertilizer feeding device according to any of the above-described (1) to (6) further includes an intake conduit for drawing up bottom water, wherein the intake conduit may feed the bottom water as fertilizer to the feeding conduit.
(8) in the fertilizer feeding device according to the above-described (7), the feeding conduit may be shorter than the intake conduit.
(9) in the fertilizer feeding device according to any of the above-described (1) to (8), the feeding conduit may have an inlet that draws bottom water at a location deeper than the aperture underwater; and the fertilizer feeder may pump up the bottom water via the feeding conduit and discharges the bottom water from the aperture of the feeding conduit.
(10) in the fertilizer feeding device according to any of the above-described (1) to (9), wherein a size of the at least one aperture or a distribution of the at least one aperture of the feeding conduit may vary according to depths underwater. The feeding conduit may have the size of the aperture increased as the depth underwater increases. When a group formed of a plurality of apertures is provided, the feeding conduit may have the number of the apertures in one group different according to the depth underwater.
(11) In the fertilizer feeding device according to any of the above-described (1) to (10), the fertilizer feeder may be installed on water.

In a second aspect of the present disclosure, provided is a fertilizer feeding method, including: feeding fertilizer to a feeding conduit; and feeding fertilizer to marine products to be cultivated underwater through apertures provided in the feeding conduit.

In a third aspect of the present disclosure, provided is a floating structure, including: a feeding conduit with apertures for feeding fertilizer to marine products to be cultivated underwater; a fertilizer feeder connected to the feeding conduit, which feeds fertilizer to the feeding conduit; an intake conduit that draws up bottom water; and a rope, wherein the marine products are locked in the rope, the feeding conduit or the intake conduit.

Note that the summary clause of the invention does not necessarily describe all features of the present invention. In addition, the present invention may also be a sub-combination of the features described above.

### BRIEF DESCRIPTION OF THE DRAWINGS

Fig. 1 illustrates a configuration of a fertilizer feeding device 100 according to the present embodiment shown together with a floating structure 150 and a rope 115.
Fig. 2 illustrates an operational flow of the fertilizer feeding device 100 according to the present embodiment.
Fig. 3 illustrates a configuration of a fertilizer feeding device 300 according to a first modification example of the present embodiment shown together with the floating structure 150.
Fig. 4 illustrates a configuration of a fertilizer feeding device 400 according to a second modification example of the present embodiment shown together with the floating structure 150.
Fig. 5 illustrates a configuration of a fertilizer feeding device 500 according to a third modification example of the present embodiment shown together with the floating structure 150.

### DESCRIPTION OF EXEMPLARY EMBODIMENTS

Hereinafter, the invention will be described through embodiments of the invention, but the following embodiments do not limit the invention according to claims.
In addition, not all of the combinations of features described in the embodiments are essential to the solving means of the invention.

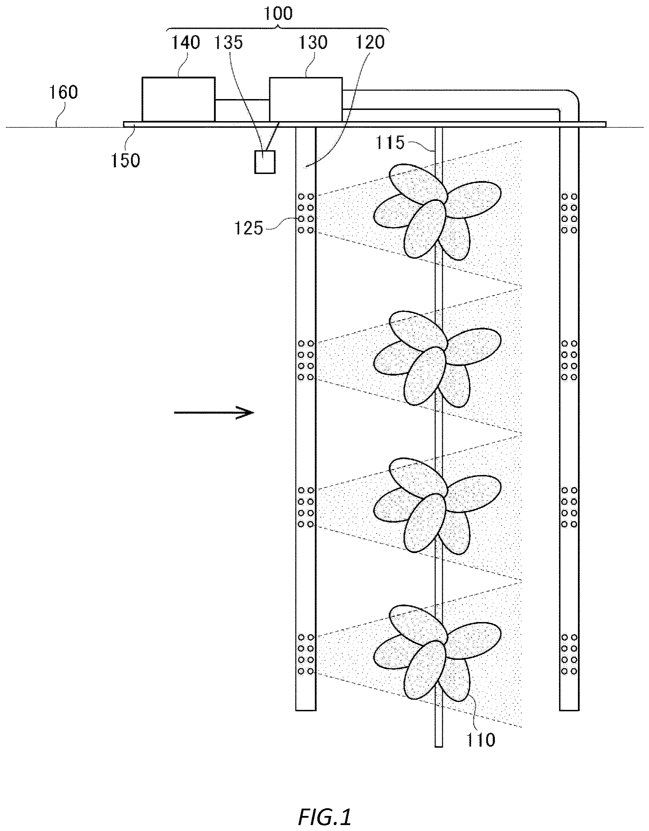

Fig. 1 illustrates a configuration of a fertilizer feeding device 100 according to the present embodiment shown together with a floating structure 150 and a rope 115. The floating structure 150, the rope 115 and the fertilizer feeding device 100 are used for cultivating marine products 110. The marine products 110 are marine products to be cultivated, which are cultivated by using the fertilizer feeding device 100, the floating structure 150 and the rope 115. Herein, the marine product 110 may be at least one of oyster, scallop, pearl oyster, clam, cockle, or other shellfish.

The floating structure 150 is a floating structure that floats on the water surface. The floating structure 150 is used to install or fix the fertilizer feeding device 100 and the rope 115. The floating structure 150 may install or fix at least a part of the configuration of the fertilizer feeding device 100. The floating structure 150 is made of a material floating on the water surface 160, not particularly limited. As one example, the floating structure 150 may be a raft. The floating structure 150 has a first surface arranged above the water surface 160, and a second surface contacting the water surface 160 or arranged below the water surface 160. The floating structure 150 may have a rectangular or another shape. The floating structure 150 may be board-shaped, or may be formed by a plurality of board-shaped or rod-shaped objects (floating bodies or the like). Note that instead of the floating structure 150, an underwater structure may be used that is fixed to the bottom of the water or the seabed and extends toward the water surface. Note that the floating structure 150 may be regarded as a structure including at least one configuration of the rope 115, the feeding conduit 120, the fertilizer feeder 130, the meter 135 or the storage container 140 in addition to the body of the floating structure 150.

The rope 115 has one end portion connected to a second surface of the floating structure 150. The rope 115 is a string-like object for locking the marine products 110. The rope 115 may be flexible. Instead of the rope 115, a rod-shaped object that is difficult to bend may be used. The rope 115 may lock the marine products 110 in a region shallower than a water depth of 10 meters.

The fertilizer feeding device 100 is a device that feeds fertilizer to the marine products 110 to be cultivated arranged underwater, such as in seawater. Typically, the food source for the marine products 110 is phytoplankton. Nutrient salt that is one of the growth factors for phytoplankton is present in the lowest amounts in the surface layer underwater, and increases in amount as the water depth becomes deeper. Accordingly, when cultivating the marine products 110 in the surface layer underwater, the growth of the marine products 110 can be promoted by feeding the marine products 110 with fertilizer such as nutrient salt that promotes the proliferation of phytoplankton and the like that serve as food for the marine products 110. The fertilizer feeding device 100 includes one or more feeding conduits 120, a fertilizer feeder 130, a meter 135 and a storage container 140.

The feeding conduit 120 is a passage for flowing fluid (liquid) fertilizer. In an example of the present illustration, the feeding conduit 120 has one end connected to the fertilizer feeder 130, and the fertilizer fed from the fertilizer feeder 130 flows toward the other end side. The feeding conduit 120 may have at least a part installed underwater. The feeding conduit 120 may be a pipe having a fixed shape, or may be a flexible tube. As one example, the feeding conduit 120 may be formed of polyvinyl chloride resin or other resins. The feeding conduit 120 may be provided with a downstream end portion at a position lower than an upstream end portion so that the fertilizer flows from upstream to downstream by gravity. As one example, the feeding conduit 120 may be provided to be substantially perpendicular. In the feeding conduit 120, each cross section may have a constant cross-sectional area in a length direction. The feeding conduit 120 may have a circular or polygonal cross section. In the feeding conduit 120, one or more apertures 125 may be provided. The feeding conduit 120 may not have any aperture in the downstream end portion. The feeding conduit 120 may have a weight connected to its downstream end portion.

When a plurality of feeding conduits 120 are provided, the plurality of feeding conduits 120 may be provided in directions different from each other with respect to the marine products 110 in the horizontal plane. For example, four feeding conduits 120 may be respectively provided at 90° intervals with respect to the marine products 110 in the horizontal plane. By providing the plurality of feeding conduits 120 in directions different from each other with respect to the marine products 110 in the horizontal plane, the fertilizer feeding device 100 can feed fertilizer near the marine products 110 regardless of the direction of the tidal current.

One or more apertures 125 are apertures to feed fertilizer to the marine products 110 to be cultivated underwater. The aperture 125 is not particularly limited as long as its size allows fertilizer to pass through. When a plurality of apertures 125 are provided, the respective apertures 125 may have the same size, or may have different sizes. The one or more apertures 125 may be provided in a portion to be installed underwater of a feeding conduit 120. The plurality of apertures 125 may be provided at each of the plurality of depths underwater. In this case, the marine products 110 may be locked near the at least one aperture 125 provided at each of the plurality of depths. By locking the marine products 110 near the aperture 125, the feeding conduit 120 can feed fertilizer to the marine products 110 efficiently. The aperture 125 may be provided regularly or irregularly. As one example, a group consisting of the plurality of apertures 125 may be provided regularly or irregularly. In an example of the present illustration, a group consisting of eight apertures 125 is provided with a constant interval. The apertures 125 may be provided in the direction of the marine products 110. By providing the apertures 125 in the direction of the marine products 110, the feeding conduit 120 can feed fertilizer to the marine products 110 efficiently.

The feeding conduit 120 may have the sizes of the one or more apertures 125 or the distribution of the one or more apertures 125 that are different according to the depth underwater. For example, the feeding conduit 120 may have the size of the aperture 125 increased as the depth becomes deeper underwater. When the group consisting of the plurality of apertures 125 are provided, the feeding conduit 120 may have the number of the apertures 125 in each group that are different according to the depth underwater. For example, the feeding conduit 120 may have the number of the apertures 125 in one group increased as the depth becomes deeper underwater. With such feeding conduits 120, the discharge amount of fertilizer can be kept, for example, almost the same or the like, at locations in different depths, that is, at locations with different water pressure underwater.

The storage container 140 is provided on a first surface of the floating structure 150. The storage container 140 is a container that contains raw materials for fertilizer. The storage container 140 may contain liquid or solid raw materials. The storage container 140 according to the present embodiment may contain a liquid or solid containing nutrient salt (nitrogen or phosphorous) as the raw material of fertilizer. The storage container 140 may be capable of being replenished with raw materials inside. The storage container 140 may be installed on water. By installing the storage container 140 on water, the raw materials of fertilizer can be replenished without drawing up the storage container 140 from water.

The fertilizer feeder 130 is provided on the first surface of the floating structure 150. The fertilizer feeder 130 is connected to the one or more feeding conduits 120 and the storage container 140. The fertilizer feeder 130 accepts the raw materials of fertilizer from the storage container 140. The fertilizer feeder 130 may collect water nearby. The fertilizer feeder 130 may mix the raw materials of fertilizer accepted from the storage container 140 with water, and prepare fertilizer to be fed to the marine products 110. The fertilizer feeder 130 feeds fertilizer to the feeding conduit 120. The fertilizer feeder 130 may be installed on water. By installing the fertilizer feeder 130 on water, deterioration and damage or the like caused by components contained in water or water flow can be prevented. By installing the fertilizer feeder 130 on water, since the storage container 140 is also installed on water to feed the raw materials of fertilizer to the fertilizer feeder 130, replenishing the fertilizer becomes easier.

The meter 135 is connected to the fertilizer feeder 130. The meter 135 may be connected to the fertilizer feeder 130 by a rope or the like. The meter 135 may be communicable with the fertilizer feeder 130 via a cable or a wireless network. The meter 135 measures the direction of the water flow near the rope 115 or the feeding conduit 120. The meter 135 may be provided underwater or on the water surface 160. The meter 135 may have a float and measure the direction of the water flow from the direction in which the float flows. The meter 135 may have an imaging sensor and measure, by the imaging sensor, the direction in which the float flows. The meter 135 may be a tidal current meter.

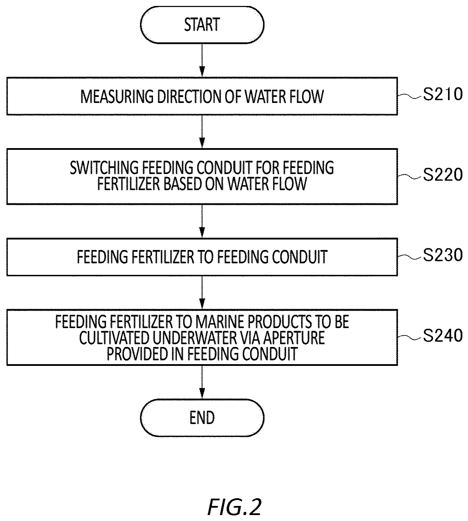

Fig. 2 illustrates an operational flow of the fertilizer feeding device 100 according to the present embodiment. In step 210 (S210), the meter 135 measures the direction of the water flow. The meter 135 may transmit the measured direction of the water flow to the fertilizer feeder 130.

In S220, the fertilizer feeder 130 switches the feeding conduit 120, among the plurality of feeding conduits 120, which feeds fertilizer according to the water flow. For example, the fertilizer feeder 130 may select the feeding conduit 120 installed in the upstream direction of the water flow as a feeding conduit 120 that feeds fertilizer, flow fertilizer through the selected feeding conduit 120, and not flow fertilizer through unselected feeding conduits 120. By switching the feeding conduit 120 that feeds fertilizer according to the water flow with the fertilizer feeder 130, the fertilizer feeding device 100 can feed fertilizer to the marine products 110 efficiently.

In S230, the fertilizer feeder 130 feeds fertilizer to the feeding conduit 120. In S240, the fertilizer feeding device 100 feeds fertilizer to the marine products 110 to be cultivated underwater through an aperture 125 provided in the feeding conduit 120.

In prior arts, since containers containing fertilizer are provided at various locations underwater, not only is it difficult to see how much fertilizer is left, but the containers need to be lifted out of the water to change the fertilizer. According to the fertilizer feeding device 100 shown above, since the fertilizer is fed via the aperture 125 of the feeding conduit 120, costs can be reduced compared to installing containers containing fertilizer underwater.

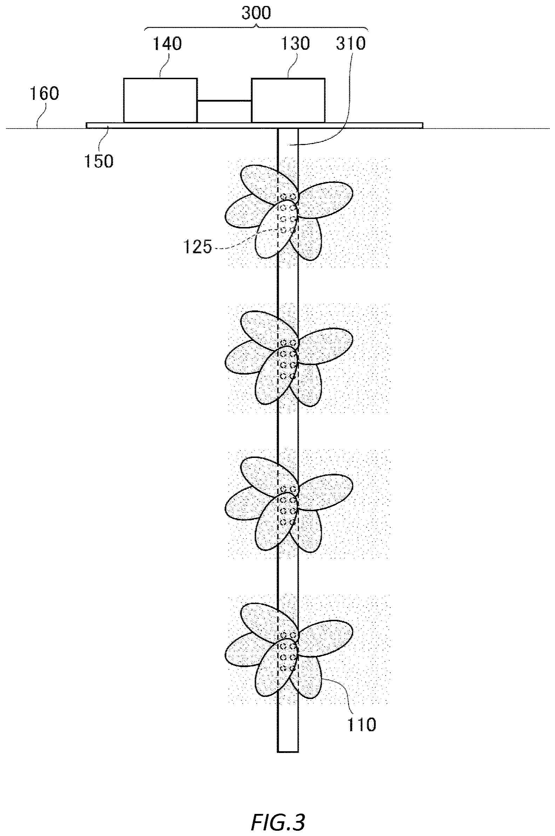

Fig. 3 illustrates a configuration of the fertilizer feeding device 300 according to a first modification example of the present embodiment, together with the floating structure 150. The floating structure 150 may be similar to that shown in Fig. 1. The fertilizer feeding device 300 includes marine products 110, a feeding conduit 310, a fertilizer feeder 130 and a storage container 140. Since the fertilizer feeding device 300 is a variant of the fertilizer feeding device 100 shown in Fig. 1, the following explanation will be omitted except for the differences.

The feeding conduit 310 is a passage for flowing fertilizer. The feeding conduit 310 has one or more apertures 125. The feeding conduit 310 also functions as the rope 115 in FIG. 1, and locks the marine products 110 to the outer surface. The feeding conduit 310 may lock the marine products 110 near the aperture 125. The feeding conduit 310 may be similar to the feeding conduit 120 in Fig. 1 in other points. According to the fertilizer feeding device 300 shown above, since the feeding conduit 310 locks marine products 110 to the outer surface, the distance between the aperture 125 and marine products 110 becomes closer, thereby, the marine products 110 can feed fertilizer efficiently.

Note that the floating structure 150 shown in Fig. 3 may be regarded as a structure including at least one configuration of the feeding conduit 310, the fertilizer feeder 130, or the storage container 140 in addition to the floating structure 150 body.

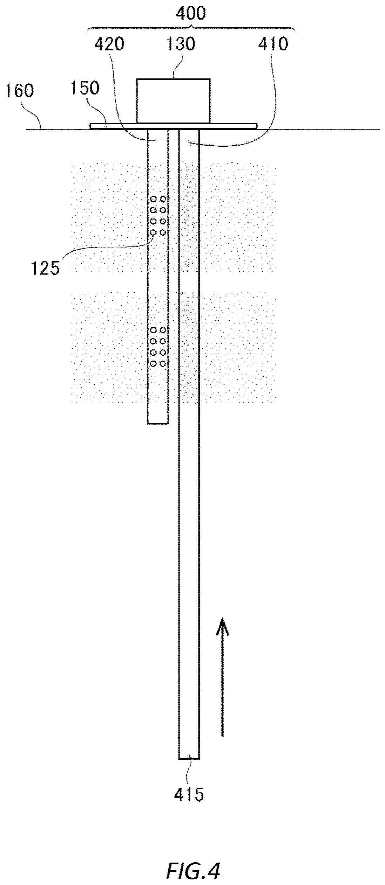

Fig. 4 illustrates a configuration of the fertilizer feeding device 400 according to a second modification example of the present embodiment, together with the floating structure 150. The floating structure 150 may be similar to that shown in Fig. 1. The fertilizer feeding device 400 includes an intake conduit 410, a feeding conduit 420 and a fertilizer feeder 130. Since the fertilizer feeding device 400 is a variant of the fertilizer feeding device 100 shown in Fig. 1, the following explanation will be omitted except for the differences.

The intake conduit 410 is connected to the fertilizer feeder 130. The intake conduit 410 draws up bottom water. Herein, the bottom water may be water at a position deeper than the position for fixing the marine products. For example, the bottom water may be water as deep as or deeper than 50 m, or water as deep as or deeper than the euphotic zone, or water near the seabed. The intake conduit 410 may be provided to be substantially perpendicular. The intake conduit 410 has an inlet 415. The intake conduit 410 may have an inlet 415 at a lower end portion, or may have an inlet at a location other than the lower end portion. The intake conduit 410 may draw up the bottom water from the inlet 415. The intake conduit 410 feeds drawn-up bottom water to the fertilizer feeder 130. Accordingly, the intake conduit 410 feeds the bottom water as fertilizer to the feeding conduit 420, via the fertilizer feeder 130.

The feeding conduit 420 is connected to the fertilizer feeder 130. The feeding conduit 420 is a flow passage for flowing the bottom water. The feeding conduit 420 may be shorter than the intake conduit 410. Accordingly, the feeding conduit 420 may have a downstream end portion at a location shallower than the lower end portion of the intake conduit 410. The feeding conduit 420 may have one or more apertures 125 at a location shallower than the inlet 415 of the intake conduit 410. According to such a feeding conduit 420, deep water drawn up by the intake conduit 410 can be fed to a position shallower than the position where the deep water is drawn up and with less nutrient salt. Similar to Fig. 2, the feeding conduit 420 may lock marine products to the outer surface. Alternatively, the fertilizer feeding device 400 may include a rope or the like, and the rope or the like may lock the marine products. The feeding conduit 420 may be similar to the feeding conduit 120 in Fig. 1 in other points.

Note that the floating structure 150 shown in Fig. 4 may be regarded as a structure including at least one configuration of a feeding conduit 510, a fertilizer feeder 130 or a rope in addition to the floating structure 150 body. In this case, the marine products may lock the rope or the feeding conduit 510.

According to the fertilizer feeding device 400 shown above, by using deep water as fertilizer, the need for fertilizer replenishment can be eliminated, and operating costs can be reduced.

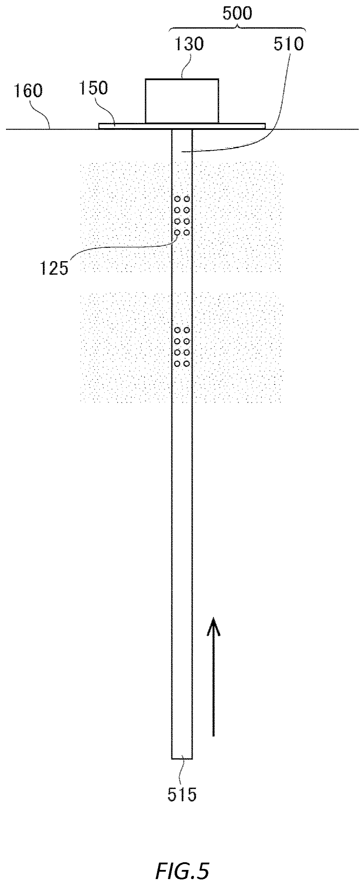

Fig. 5 illustrates a configuration of the fertilizer feeding device 500 according to a third modification example of the present embodiment, together with the floating structure 150. The floating structure 150 may be similar to that shown in Fig. 1. The fertilizer feeding device 500 includes a feeding conduit 510 and a fertilizer feeder 130. Since the fertilizer feeding device 500 is a variant of the fertilizer feeding device 100 shown in Fig. 1, the following explanation will be omitted except for the differences.

The feeding conduit 510 is connected to the fertilizer feeder 130. The feeding conduit 510 pumps up bottom water, and feeds the drawn up bottom water to the marine products to be cultivated. The feeding conduit 510 may be a single-layer pipe or a double-layer pipe. The feeding conduit 510 may have a partition wall inside. The feeding conduit 510 has one or more apertures 125. The feeding conduit 510 has an inlet 515 for drawing bottom water at a location deeper than the aperture 125 underwater. Accordingly, the fertilizer feeder 130 pumps up bottom water via the feeding conduit 510 to discharge the bottom water from the aperture 125 of the feeding conduit 510. When the feeding conduit 510 is a double-layer pipe, the fertilizer feeder 130 may pump bottom water via a pipe inside the feeding conduit 510 up to the vicinity of the water surface 160, to flow the bottom water in a pipe outside the feeding conduit 510 and discharge the bottom water from the aperture 125. When the feeding conduit 510 has a partition wall inside, the fertilizer feeder 130 may pump bottom water via one region in the feeding conduit 510 separated by the partition wall up to the vicinity of the water surface 160, to flow the bottom water in the other one region in the feeding conduit 510 separated by the partition wall and discharge the bottom water from the aperture 125. When the feeding conduit 510 is a single-layer pipe, the fertilizer feeder 130 may pump bottom water drawn from the inlet 515 up to the above, and discharge the bottom water portion-wise from each aperture 125 along the way of the feeding conduit 510. Similar to Fig. 2, the feeding conduit 510 may lock the marine products to the outer surface. Alternatively, the fertilizer feeding device 500 may include a rope or the like, and the rope or the like may lock the marine products. The feeding conduit 510 may be similar to the feeding conduit 120 in Fig. 1 in other points.

Note that the floating structure 150 shown in Fig. 5 may be regarded as a structure including at least one configuration of the feeding conduit 310, the fertilizer feeder 130 or the storage container 140 in addition to the floating structure 150 body.

According to the fertilizer feeding device 500 shown above, by using deep water as fertilizer, the need for fertilizer replenishment can be eliminated, and operating costs can be reduced.

Various embodiments of the present invention may be described with reference to flowcharts and block diagrams, where blocks may represent (1) stages of processes in which operations are executed or (2) sections of apparatuses responsible for executing operations. Certain stages and sections may be implemented by a dedicated circuit, a programmable circuit supplied together with computer-readable instructions stored on computer-readable media, and/or processors supplied together with computer-readable instructions stored on computer-readable media. The dedicated circuit may include digital and/or analog hardware circuits, and may include integrated circuits (IC) and/or discrete circuits. The programmable circuit may include a reconfigurable hardware circuit including logical AND, logical OR, logical XOR, logical NAND, logical NOR, and other logical operations, a memory element or the like such as a flip-flop, a register, a field programmable gate array (FPGA) and a programmable logic array (PLA), or the like.

A computer-readable medium may include any tangible device that can store instructions to be executed by a suitable device, and as a result, the computer-readable medium having instructions stored thereon includes a product including instructions that can be executed in order to create means for executing operations specified in the flowcharts or block diagrams. Examples of the computer-readable medium may include an electronic storage medium, a magnetic storage medium, an optical storage medium, an electromagnetic storage medium, a semiconductor storage medium, and the like. More specific examples of the computer-readable medium may include a FLOPPY (registered trademark) disk, a diskette, a hard disk, a random access memory (RAM), a read-only memory (ROM), an erasable programmable read-only memory (EPROM or flash memory), an electrically erasable programmable read-only memory (EEPROM), a static random access memory (SRAM), a compact disc read-only memory (CD-ROM), a digital versatile disk (DVD), a BLU-RAY (registered trademark) disk, a memory stick, an integrated circuit card, and the like.

The computer-readable instruction may include: an assembler instruction, an instruction-set-architecture (ISA) instruction; a machine instruction; a machine dependent instruction; a microcode; a firmware instruction; state-setting data; or either a source code or an object code written in any combination of one or more programming languages, including an object oriented programming language such as Smalltalk (registered trademark), JAVA (registered trademark), C++, or the like, and a conventional procedural programming language such as a "C" programming language or a similar programming language.

The computer-readable instructions may be provided for a processor or programmable circuit of a general purpose computer, special purpose computer, or other programmable data processing apparatuses such as a computer locally or via a wide area network (WAN) such as a local area network (LAN), the Internet, or the like, and execute the computer-readable instructions in order to create means for executing the operations designated in flowcharts or block diagrams. Here, the computer may be a personal computer, or PC, a tablet computer, a smartphone, a workstation, a server computer, a general purpose computer, a special purpose computer, or the like, or may be a computer system to which a plurality of computers are connected. Such computer system to which the plurality of computers are connected is also referred to as a distributed computing system, and is a computer in a broad sense. In the distributed computing system, the plurality of computers collectively execute the program by each of the plurality of computers performing a part of the program and passing the data during program execution between the computers as needed.

Examples of the processor include a computer processor, a central processing unit (CPU), a processing unit, a microprocessor, a digital signal processor, a controller, a microcontroller, and the like. The computer may include one processor or a plurality of processors. In a multi-processor system including a plurality of processors, the plurality of processors collectively execute a program by each of the processors executing a portion of the program, and passing data during the execution of the program among the processors as needed. For example, in execution of multiple tasks, each of the plurality of processors may execute a portion of each task pieces by pieces by performing task-switching for each time slice. In this case, which portion of one program each processor is responsible for executing dynamically changes. Moreover, which portion of the program each of the plurality of processor is responsible for executing may be determined statically by multiprocessor-aware programming.

While the present invention has been described by way of the embodiments, the technical scope of the present invention is not limited to the above described embodiments. It is apparent to persons skilled in the art that various alterations or improvements can be made to the above described embodiments. It is also apparent from the description of the claims that the form to which such alterations or improvements are made can be included in the technical scope of the present invention.

It should be noted that the operations, procedures, steps, stages, and the like of each process performed by an apparatus, system, program, and method shown in the claims, the specification, or the drawings can be realized in any order as long as the order is not indicated by "prior to," "before," or the like and as long as the output from a previous process is not used in a later process. Even if the operation flow is described by using phrases such as "first" or "next" for the sake of convenience in the claims, specification, and drawings, it does not necessarily mean that the process must be performed in this order.

### EXPLANATION OF REFERENCES

100: fertilizer feeding device; 110: marine product; 115: rope; 120: feeding conduit; 125: aperture; 130: fertilizer feeder; 135: meter; 140: storage container; 150: floating structure; 160: water surface; 300: fertilizer feeding device; 310: feeding conduit; 400: fertilizer feeding device; 410: intake conduit; 415: inlet; 420: feeding conduit; 500: fertilizer feeding device; 510: feeding conduit; 515: inlet.

## Claims

1. A fertilizer feeding device, comprising:
a feeding conduit with apertures for feeding fertilizer to marine products to be cultivated underwater; and
a fertilizer feeder connected to the feeding conduit, which feeds fertilizer to the feeding conduit.

2. The fertilizer feeding device according to claim 1, wherein:
the feeding conduit
has at least one aperture of the apertures provided at each of a plurality of depths underwater; and
locks the marine products near the at least one aperture provided at each of the plurality of depths.

3. The fertilizer feeding device according to claim 1 or 2, wherein the aperture is provided in a direction of the marine products.

4. The fertilizer feeding device according to any one of claims 1 to 3,
comprising a plurality of the feeding conduits,
wherein the plurality of feeding conduits are provided in directions different from each other with respect to the marine products in a horizontal plane.

5. The fertilizer feeding device according to claim 4, wherein the fertilizer feeder switches a feeding conduit that feeds fertilizer among the plurality of feeding conduits according to a water flow.

6. The fertilizer feeding device according to any one of claims 1 to 5, wherein the feeding conduit locks the marine products on an outer surface thereof.

7. The fertilizer feeding device according to any one of claims 1 to 6,
further comprising an intake conduit for drawing up bottom water,
wherein the intake conduit feeds the bottom water as fertilizer to the feeding conduit.

8. The fertilizer feeding device according to claim 7, wherein the feeding conduit is shorter than the intake conduit.

9. The fertilizer feeding device according to any one of claims 1 to 8, wherein:
the feeding conduit has an inlet that draws bottom water at a location deeper than the aperture underwater; and
the fertilizer feeder pumps up the bottom water via the feeding conduit and discharges the bottom water from the aperture of the feeding conduit.

10. The fertilizer feeding device according to claim 2, wherein a size of the at least one aperture or a distribution of the at least one aperture of the feeding conduit varies according to depths underwater.

11. The fertilizer feeding device according to any one of claims 1 to 10, wherein the fertilizer feeder is installed on water.

12. A fertilizer feeding method, comprising:
feeding fertilizer to a feeding conduit; and
feeding fertilizer to marine products to be cultivated underwater through apertures provided in the feeding conduit.

13. A floating structure, comprising:
a feeding conduit with apertures for feeding fertilizer to marine products to be cultivated underwater;
a fertilizer feeder connected to the feeding conduit, which feeds fertilizer to the feeding conduit;
an intake conduit that draws up bottom water; and
a rope,
wherein the marine products are locked in the rope, the feeding conduit or the intake conduit.
